# EUROPÄISCHE PATENTSCHRIFT

(11) **EP 2 145 798 B1**
(45) Veröffentlichungstag und Bekanntmachung des Hinweises auf die Patenterteilung: **09.08.2017**
(21) Anmeldenummer: 09161955.1
(22) Anmeldetag: 04.06.2009
(51) Int. Cl.: B62D 5/04

(54) **VERFAHREN ZUR STEUERUNG DES SPANNUNGSNIVEAUS IM ELEKTRISCHEN BORDNETZ EINES KRAFTFAHRZEUGS**
METHOD FOR CONTROLLING THE VOLTAGE LEVEL IN THE ELECTRICAL SYSTEM OF A MOTOR VEHICLE
PROCÉDÉ DE COMMANDE DU NIVEAU DE TENSION DANS UN RÉSEAU DE BORD ÉLECTRIQUE D'UN VÉHICULE AUTOMOBILE

(30) Priorität: 15.07.2008 DE 102008033115
(43) Veröffentlichungstag der Anmeldung: 20.01.2010
(73) Patentinhaber: Bayerische Motoren Werke Aktiengesellschaft, 80809 München (DE)
(72) Erfinder: Wust, Axel, 81375 München (DE)

(56) Entgegenhaltungen:
- EP-A2- 1 293 388
- EP-A2- 1 950 121
- DE-A1- 10 150 378
- DE-A1- 19 745 849
- FR-A1- 2 790 428
- US-B1- 6 745 117

## Beschreibung

Die Erfindung betrifft ein Verfahren zur Steuerung des elektrischen Spannungsniveaus im elektrischen Bordnetz eines Kraftfahrzeugs, wobei ein auf einen niedrigeren Wert abgesenktes Spannungsniveau zur ausreichenden Versorgung zumindest eines von einer elektronischen Steuereinheit angesteuerten, elektrisch betriebenen und eine Einflussnahme auf die Fahrdynamik des Kraftfahrzeugs ermöglichenden Aktuators, insbesondere eines Elektromotors zur Einstellung eines Spurwinkels an einem lenkbaren Fahrzeug-Rad insbesondere ohne direkten Zugriff durch den Fahrzeug-Führer, auf einen höheren Wert angehoben wird, wenn eine elektronische Steuereinheit eine aktuelle oder bevorstehende Inbetriebnahme des Aktuators erkennt.

Um den Energieverbrauch moderner Kraftfahrzeuge zu minimieren, wird beispielsweise bei den Fahrzeugen der Anmelderin, die mit dem sog. "Efficient-Dynamic-Paket" ausgerüstet sind, in bestimmten Fahrsituationen des Fahrzeugs der Akkumulator des elektrischen Fahrzeug-Bordnetzes gezielt entladen, d.h. es wird die im Kraftfahrzeug benötigte elektrische Energie aus dem Akkumulator entnommen, ohne den vom als Brennkraftmaschine ausgebildeten Fahrzeug-Antriebsaggregat angetriebenen elektrischen Generator zu betreiben. Hierdurch verbraucht letztgenannter keine vom Antriebsaggregat bereit gestellte Energie, so dass der Kraftstoffverbrauch und somit auch die CO₂-Emission des Kraftfahrzeugs hierdurch reduziert werden kann. Als Folge der Entnahme von elektrischer Energie aus dem Akkumulator ohne gleichzeitigen Betrieb des elektrischen Generators sinkt jedoch das Niveau der elektrischen Spannung im Fahrzeug-Bordnetz ab.

Andererseits sind in einem modernen Kraftfahrzeug eine Vielzahl von letztlich elektrisch betriebenen Aktuatoren insbesondere in Form von Elektromotoren vorhanden, die zwar nicht andauernd betrieben werden, die jedoch dann, wenn sie benötigt werden, uneingeschränkt betreibbar sein sollen, was insofern problematisch sein kann, als diese für ihre einwandfreie Funktion ein bestimmtes Minimal-Spannungsniveau benötigen. Insbesondere dann, wenn mehrere solcher Aktuatoren zugeschaltet werden, wird im Bordnetz des Fahrzeugs ein gewisser Spannungs-Abfall zu beobachten sein.

An einem Kraftfahrzeug haben Aktuatoren, welche die Fahrdynamik des Kraftfahrzeugs beeinflussen, naturgemäß eine besonders hohe Bedeutung. Als Beispiele für derartige Aktuatoren seien Elektromotore zur Beeinflussung des Spurwinkels eines zumindest geringfügig lenkbaren Fahrzeug-Rades genannt, wobei neben einem einfachen, im wesentlichen lediglich ein Unterstützungsmoment in das Lenksystem der Vorderräder einleitendem Servo-Elektromotor auch Elektromotoren zur Einstellung eines Spurwinkels oder Lenkwinkels an den Hinterrädern des Fahrzeugs zu nennen sind, weiterhin Elektromotoren sog. Überlagerungs-Lenksysteme, bei denen einem vom Fahrzeug-Führer mit seinem Lenkrad vorgegebenen Lenkwinkel ein zusätzlicher positiver oder negativer Lenkwinkel überlagert und daraufhin der entsprechende Summen-Lenkwinkel an den lenkbaren Vorderrädern eingestellt wird. Als weitere Beispiele seien letztlich elektromotorisch betätigte Aktuatoren genannt, mit denen die Längs-Dynamik oder Vertikal-Dynamik des Fahrzeugs beeinflusst werden kann, wobei erstgenannte beispielsweise elektromotorisch angetriebene Pumpen oder Ventile in einem Hydraulikkreis des Fahrzeug-Bremssystems sein können, während letztgenannte elektromotorisch angetriebene Pumpen oder Elektromotoren bspw. für eine sog. Federfußpunkt-Verstellung der Aufbau-Tragfedern des Fahrzeugs oder für ein Tordieren der Hälften eines mittig geteilten Querstabilisators des Fahrzeug-Fahrwerks sein können.

Stand der Technik (zumindest interner Stand der Technik) ist es, dass durch eine elektronische Steuereinheit stets dann eine Anhebung des Spannungsniveaus im elektrischen Bordnetz des Fahrzeugs beispielsweise von einem niedrigen Wert in der Größenordnung von 9,5 Volt auf einen höheren Wert in der Größenordnung von 12,5 Volt vorgenommen wird, sobald sich entweder eine Zuschaltung bzw. Inbetriebnahme eines solchen für die Fahrdynamik des Fahrzeugs wesentlichen bzw. sicherheitsrelevanten Aktuators für eine elektronische Steuereinheit erkennbar abzeichnet oder spätestens dann, wenn ein solcher Aktuator in Betrieb genommen wird. Diese sog. Spannungsanhebung erfolgt dabei durch Zuschalten bzw. Aktivieren des zuvor abgeschalteten bzw. still gesetzten elektrischen Generators.

Vorliegend wurde erkannt, dass diesbezüglich eine Verbesserung möglich ist, die aufzuzeigen sich die Erfindung zur Aufgabe gestellt hat.
Die Lösung dieser Aufgabe ist für ein Verfahren nach dem Oberbegriff des Anspruchs 1 dadurch gekennzeichnet, dass eine Anhebung des elektrischen Spannungsniveaus nur dann durchgeführt wird, wenn die am Aktuator oder an der diesen ansteuernden elektronischen Steuereinheit anliegende elektrische Spannung einen bestimmten Grenzwert unterschreitet. Dabei können für verschiedene Randbedingungen, aufgrund derer der Aktuator in Betrieb genommen wird, verschiedene Grenzwerte bezüglich der aktuell anliegenden elektrischen Spannung vorgesehen sein, bei Unterschreiten welcher eine Spannungsanhebung durchgeführt wird. So kann für einen einen Spurwinkel einstellenden und dabei nicht direkt vom Fahrzeug-Führer beeinflussten Elektromotor vorgesehen sein, dass für den Fall einer Inbetriebnahme des Elektromotors aufgrund einer hohen Lenkanforderung des Fahrzeug-Führers ein höherer Spannungs-Grenzwert vorgesehen ist als für den Fall einer Inbetriebnahme des Elektromotors aufgrund eines von einer elektronischen Steuereinheit veranlassten fahrdynamischen Regeleingriffs.

Es wurde erkannt, dass im Stand der Technik auch dann eine Anhebung der elektrischen Bordnetz-Spannung durch Zuschalten des elektrischen Generators durchgeführt wird, wenn eigentlich ein ausreichend hoher Spannungswert am in Betrieb zu nehmenden Aktuator oder an dessen elektronischer Steuereinheit anliegt, so dass der vom Aktuator geforderte bzw. durchzuführende Stellvorgang mit ausreichender Dynamik auch ohne eine solche Spannungs-Anhebung ordnungsgemäß ausgeführt werden könnte. Mit der dann eigentlich überflüssigen Spannungs-Anhebung wird durch den dann erfolgenden Generator-Betrieb ein mögliches Energie-Einsparpotential nicht genutzt; dessen Nutzung wird nun aufgrund der Tatsache, dass der Generator möglicherweise weiterhin still gesetzt bleiben kann, hingegen ermöglicht, wenn erfindungsgemäß zusätzlich zur aktuellen oder bevorstehenden Aktuator-Aktivierung der aktuell am zu aktivierenden Aktuator oder an dessen elektronischer Steuereinheit anliegende Spannungswert abgefragt wird und in Abhängigkeit vom Ergebnis dieser Abfrage lediglich bedarfsweise eine Spannungs-Anhebung durchgeführt wird. Es wird also nur dann eine Spannungsanhebung durchgeführt (und somit der zuvor still gesetzte elektrische Generator in Betrieb genommen), wenn der festgestellte aktuelle Wert der elektrischen Spannung nicht ausreichend hoch ist, um den Aktuator in gewünschter Weise betreiben zu können.

Neben der Abfrage des aktuell am Aktuator oder an der diesen ansteuernden elektronischen Steuereinheit anliegenden elektrischen Spannungswertes ist weiterhin (wie im Stand der Technik) das Erkennen einer aktuellen oder bevorstehenden Inbetriebnahme des jeweiligen Aktuators ein Kriterium für die Entscheidung über eine Spannungsanhebung in einer elektronischen Steuereinheit. Dabei kann eine aktuelle Inbetriebnahme des Aktuators rein "reaktiv" erkannt werden, beispielsweise bei Vorliegen einer bestimmten Randbedingung. Im Falle eines das Lenksystem des Fahrzeugs betreffenden Aktuators, welcher also bei der Einstellung eines Spurwinkel eines lenkbaren Fahrzeug-Rades entweder unterstützend mitwirkt oder einen solchen Spurwinkel direkt einstellt, kann die Lenkanforderung des Fahrzeug-Führers, insbesondere in Form der Betätigungsgeschwindigkeit des Lenkrads, eine solche abgefragte Randbedingung sein, aufgrund derer bei Vorliegen oder Überschreiten eines festgelegten Wertes der Aktuator dann rein reaktiv in Betrieb genommen wird. Es kann aber auch eine bevorstehende Inbetriebnahme des Aktuators in einer elektronischen Steuereinheit erkannt werden, beispielsweise anhand eines oder mehrerer sog. Reglerindikatoren in einer die Fahrdynamik des Kraftfahrzeugs überwachenden und/oder beeinflussenden elektronischen Steuereinheit. Hier wird also dann, wenn das Spannungsniveau im elektrischen Bordnetz zuvor auf einen relativ niedrigen Wert abgesenkt wurde, das Spannungsniveau im Bordnetz selbsttätig quasi prophylaktisch angehoben, weil eine Zuschaltung bzw. Inbetriebnahme eines Aktuators zu erwarten ist

Eine bevorstehende Inbetriebnahme eines Aktuators kann aufgrund von Modellberechnungen unter Zugrundelegung des aktuellen Fahrzustands sowie der Vorgaben des Fahrzeug-Führers erkannt werden, ferner anhand einfacher sog "Flags" in einer Reglerstruktur, so bspw. in einem Bremsregelsystem, welche bei Eingriff eines Fahrzustands-Stabilisierungsprogramms (sog. ESP bzw. DSC) gesetzt werden. Als Beispiel kann die sog. *µ*-split-Bremsung genannt werden, also ein Bremsvorgang, bei dem zwischen den linksseitigen Rädern des Fahrzeugs und der Fahrbahn ein signifikant anderer Reibwert vorliegt als zwischen den rechtsseitigen Rädern des Fahrzeugs und der Fahrbahn: Ein Indikator, dass es sich um eine solche Situation handelt, ist bspw. ein bestimmter Bremsvordruck sowie eine entsprechende Längsverzögerung, die geringer als diejenige auf dem Hoch-Reibwert ist. Iln diesem Falle führen erst mehrere gleichzeitig anschlagende Indikatoren erst zur Ausführung eines Regelungseingriffes und somit zum Setzen eines entsprechenden "Flags". Darüber hinaus kann insbesondere dann eine bevorstehende Inbetriebnahme des Aktuators erkannt werden, wenn in einer elektronischen Steuereinheit anhand einer Überwachung des Fahrzustandes auf ein Erreichen des fahrdynamischen Grenzbereich (sog. "Grenzbereichserkennung") geschlossen wird.

Beispielsweise sei in einem Personenkraftwagen der elektromotorische Lenk-Aktuator eines Vorderachs-Überlagerungs-Lenksystems zur Erreichung seiner vollen Dynamik auf einen Mindest-Spannungswert = Spannungs-Grenzwert von 10,5 Volt ausgelegt und der elektromotorische Aktuator für ein Hinterachs-Lenksystem auf einen Mindest-Spannungswert = Grenzwert von 11,0 Volt. Sollen diese Aktuatoren (oder allgemein beliebige grundsätzlich eine Spannungsanhebung fordernden Aktuatoren) gestellt werden, so wird zur Bildung der Bedingung für die Spannungsanhebung neben den Modellberechnungen bzw. sog. "Regelung-aktiv-Informationen" in Form der bereits genannten "Flags" zusätzlich die am Aktuator oder an dessen elektronischer Steuereinheit anliegende elektrische Spannung berücksichtigt, um keine unnötige Spannungsanhebung zu fordern.

Vorzugsweise werden dabei sog. Unterspannungs-Stati gebildet, die bspw. in drei frei applizierbare Bereiche aufgeteilt sind, um verschiedenen Anforderungen bzw. Randbedingungen jeweils möglichst gut angepasst gerecht werden zu können. Beispielsweise sei wie im vorhergehenden Absatz bereits angegeben der Aktuator eines Vorderachs-Überlagerungs-Lenksystems zur Erreichung seiner vollen Dynamik auf einen Mindest-Spannungswert = Spannungs-Grenzwert von 10,5 Volt ausgelegt. Dieser erste Grenzwert soll jedoch nur dann relevant sein, wenn dieser Aktuator aufgrund einer besonders schnellen Lenkanforderung des Fahrzeugs-Führers aktiviert wird. Erfolgt hingegen eine Aktivierung dieses Aktuators aufgrund eines von einem Fahrdynamik-Regelsystem veranlassten Regeleingriffs, so ist auch wegen eines dann geringeren Dynamik-Bedarfs ein geringerer, zweiter Spannungs-Grenzwert von beispielsweise 10,0 Volt sinnvoll, insbesondere um im Falle einer quasi "vorausschauenden" Information über eine bevorstehende Inbetriebnahme des Aktuators, welche im Rahmen der dem Fachmann bekannten (und bereits genannten) sog. Grenzbereichserkennung in fahrdynamischen Regelsystemen möglich ist, nicht unnötig oft eine Anhebung der Bordnetz-Spannung anzufordern. Letztere wird also nur dann durchgeführt, wenn die an der elektronischen Steuereinheit dieses Aktuators anliegende elektrische Spannung geringer als dieser zweite Spannungs-Grenzwert von 10,0 Volt ist. Schließlich ist ein dritter noch niedrigerer Spannungs-Grenzwert bspw. in der Größenordnung von 8,7 Volt vorgesehen, bei Unterschreiten dessen mit Aktivierung oder bevorstehender Aktivierung des Aktuators stets eine Spannungsanhebung durchgeführt wird, unabhängig davon aus welchem Grunde dieser Aktuator in Betrieb genommen werden soll.

Mit Durchführung des hier vorgestellten Verfahrens können sich keine unnötigen Anforderungen hinsichtlich einer Spannungsanhebung einstellen, so dass das grundsätzlich vorteilhafte Energie-Einsparpotential einer Absenkung der Bordnetz-Spannung in einem Kraftfahrzeug verbessert genutzt werden kann. Insbesondere mit Einsatz der genannten Grenzbereichserkennung sowie unter Verwendung von sog. Regierindikatoren (bpsw. In Form der o.g. "Flags") wird dennoch sichergestellt, dass im Bedarfsfall eine ausreiche hohe elektrische Spannung am jeweiligen Aktuator zur Verfügung steht, so dass angeforderte Eingriffe korrekt ausgeführt werden können und insbesondere kritische Fahrsituation sicher stabilisiert werden können, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Verfahren zur Steuerung des elektrischen Spannungsniveaus im elektrischen Bordnetz eines Kraftfahrzeugs, wobei ein mit abgeschaltetem elektrischen Generator auf einen niedrigeren Wert abgesenktes Spannungsniveau zur ausreichenden Versorgung zumindest eines von einer elektronischen Steuereinheit angesteuerten, elektrisch betriebenen und eine Einflussnahme auf die Fahrdynamik des Kraftfahrzeugs ermöglichenden Aktuators, insbesondere eines Elektromotors zur Einstellung eines Spurwinkels an einem lenkbaren Fahrzeug-Rad insbesondere ohne direkten Zugriff durch den Fahrzeug-Führer, durch Inbetriebnahme des elektrischen Generators auf einen höheren Wert angehoben wird, wenn eine elektronische Steuereinheit eine aktuelle oder bevorstehende Inbetriebnahme des Aktuators erkennt, **dadurch gekennzeichnet, dass** eine solche Anhebung des elektrischen Spannungsniveaus nur dann durchgeführt wird, wenn die am Aktuator oder an der diesen ansteuernden elektronischen Steuereinheit anliegende elektrische Spannung einen bestimmten Grenzwert unterschreitet.

2. Verfahren nach Anspruch 1,
**dadurch gekennzeichnet, dass** für verschiedene Randbedingungen, aufgrund derer der Aktuator in Betrieb genommen wird, verschiedene Grenzwerte bezüglich der aktuell anliegenden elektrischen Spannung vorgesehen sind, bei Unterschreiten welcher eine Spannungsanhebung durchgeführt wird.

3. Verfahren nach Anspruch 2 für einen einen Spurwinkel einstellenden und dabei nicht direkt vom Fahrzeug-Führer beeinflussten Elektromotor, **dadurch gekennzeichnet, dass** für den Fall einer Inbetriebnahme des Elektromotors aufgrund einer hohen Lenkanforderung des Fahrzeug-Führers ein höherer Spannungs-Grenzwert vorgesehen ist als für den Fall einer Inbetriebnahme des Elektromotors aufgrund eines von einer elektronischen Steuereinheit veranlassten fahrdynamischen Regeleingriffs.

4. Verfahren nach einem der vorangegangenen Ansprüche,
**dadurch gekennzeichnet, dass** eine bevorstehende Inbetriebnahme des Aktuators anhand eines oder mehrerer sog. Reglerindikatoren in einer die Fahrdynamik des Kraftfahrzeugs überwachenden und/oder beeinflussenden elektronischen Steuereinheit erkannt wird.

5. Verfahren nach einem der vorangegangenen Ansprüche,
**dadurch gekennzeichnet, dass** dann eine bevorstehende Inbetriebnahme des Aktuators erkannt wird, wenn in einer elektronischen Steuereinheit anhand einer Überwachung des Fahrzustandes auf ein Erreichen des fahrdynamischen Grenzbereich (sog. "Grenzbereichserkennung") geschlossen wird.

## Claims

1. A method for controlling the electrical voltage level in the electrical system of a motor vehicle, wherein a voltage level reduced to a lower value with switched-off electrical generator is increased to a higher value by starting up the electrical generator in order to provide a sufficient power supply to at least one electrically operated actuator, which is controlled by an electronic control unit and which makes it possible to influence the vehicle dynamics of the motor vehicle, said actuator being more especially an electric motor for setting a toe angle at a steerable vehicle wheel, in particular without direct access by the vehicle driver, if an electronic control unit identifies a current or imminent start-up of the actuator,
**characterised in that** such an increase of the electrical voltage level is performed only if the electrical voltage applied to the actuator or the electronic control unit controlling said actuator falls below a specific limit value.

2. A method according to claim 1,
**characterised in that** different limit values with regard to the currently applied electrical voltage are provided for different boundary conditions on the basis of which the actuator is set in operation, and a voltage increase is performed if the voltage falls below said limit values.

3. A method according to claim 2 for an electric motor setting a toe angle in a manner not directly influenced by the vehicle driver, **characterised in that**, should the electric motor be started up on the basis of a high steering request of the vehicle driver, a higher voltage limit value is provided than for the case in which the electric motor is started up on the basis of an intervention for controlling the vehicle dynamics prompted by an electronic control unit.

4. A method according to any one of the preceding claims, **characterised in that** an imminent start-up of the actuator is identified on the basis of one or more 'control indicators' in an electronic control unit monitoring and/or influencing the vehicle dynamics of the motor vehicle.

5. A method according to any one of the preceding claims, **characterised in that** an imminent start-up of the actuator is identified when, in an electronic control unit, it is concluded on the basis of a monitoring of the driving state that a vehicle dynamics limit has been reached ('limit identification').

## Revendications

1. Procédé de commande du niveau de tension électrique dans le réseau électrique embarqué d'un véhicule automobile, selon lequel un niveau de tension abaissé à une valeur faible, le générateur électrique étant coupé est augmenté à une valeur plus élevée par mise en service du générateur électrique pour permettre une alimentation suffisante d'au moins un actionneur commandé par une unité de commande électronique, entraîné électriquement et permettant d'agir sur la dynamique de déplacement du véhicule, en particulier d'un moteur électrique permettant de régler l'angle de pincement d'une roue directrice du véhicule, en particulier sans action directe du conducteur de ce véhicule, lorsque une unité de commande électronique reconnaît une mise en service actuelle ou imminente de l'actionneur,
caractérisé en qu'
une telle augmentation du niveau de tension électrique n'est effectuée que lorsque la tension électrique appliquée sur l'actionneur ou sur l'unité de commande électronique commandant celui-ci passe au-dessous d'une valeur de seuil prédéfinie.

2. Procédé conforme à la revendication 1,
**caractérisé en ce que**
pour différentes conditions limites sur le fondement desquelles l'actionneur est mis en fonctionnement, il est prévu différentes valeurs limites concernant la tension électrique actuellement appliquée dont le dépassement par le bas entraîne une augmentation de la tension.

3. Procédé conforme à la revendication 2 destiné à un moteur électrique réglant l'angle de pincement et non directement influencé par le conducteur du véhicule,
**caractérisé en ce que**
dans le cas d'une mise en service du moteur électrique en raison d'une demande de braquage important du conducteur du véhicule, il est prévu une valeur limite plus élevée de la tension que dans le cas d'une mise en service du moteur électrique en raison d'une action de régulation de la dynamique de déplacement provoquée par une unité de commande électronique.

4. Procédé conforme à l'une des revendications précédentes,
**caractérisé en ce que**
l'on reconnaît une mise en service imminente de l'actionneur sur le fondement d'un ou de plusieurs indicateur(s) de régulation dans une unité de commande électronique surveillant et/ou agissant sur la dynamique de déplacement du véhicule.

5. Procédé conforme à l'une des revendications précédentes,
**caractérisé en ce que**
l'on reconnaît une mise en service imminente de l'actionneur, lorsque l'on conclut, dans une unité de commande électronique, sur le fondement d'une surveillance de l'état de déplacement, à l'atteinte d'une plage limite de la dynamique de déplacement, c'est-à-dire, une reconnaissance de plage limite.
